# EUROPEAN PATENT SPECIFICATION

(11) **EP 2 766 185 B1**
(45) Date of publication and mention of the grant of the patent: **20.08.2025**
(21) Application number: 12779253.9
(22) Date of filing: 12.10.2012
(51) Int. Cl.: B32B 27/00, B32B 27/08, B32B 27/16, B32B 27/26, B32B 27/28, B32B 27/30, B32B 27/32, B32B 27/36, C08J 7/04, C09D 4/00

(54) **LAMINATE CONTAINING COATED POLYESTER FILM**
LAMINAT MIT BESCHICHTETER POLYESTERFOLIE
STRATIFIÉ COMPORTANT UN FILM DE POLYESTER COUCHÉ

(30) Priority: 14.10.2011 US 201161547286 P
(43) Date of publication of application: 20.08.2014
(73) Proprietor: Mitsubishi Polyester Film, Inc., Greer, SC 29650 (US)
(72) Inventor: GRAH, Michael D., Greer, South Carolina 29650 (US)
(74) Representative: Schweitzer, Klaus
(86) International application number: PCT/US2012/059924
(87) International publication number: WO 2013/056027

(56) References cited:
- EP-A1- 2 255 962
- EP-A1- 2 258 551
- EP-A1- 2 479 026
- EP-A1- 2 479 027
- WO-A1-2011/117694
- JP-A- 2011 116 133
- US-A1- 2009 214 854
- US-A1- 2010 215 902

## Description

### BACKGROUND

Photovoltaic devices convert light energy, such as sunlight, into electricity. Photovoltaic devices typically include one or more solar cells that contain a semiconductor material. The semiconductor material may comprise, for instance, silicon or any other suitable material. When light energy strikes the solar cell, the semiconductor material can produce an electric current if connected to an electric circuit. A number of solar cells electrically connected to each other and mounted in a support structure are typically referred to as a photovoltaic module. A photovoltaic array, on the other hand, can comprise a plurality of modules.

The solar cells are typically placed behind a transparent material, such as a glass sheet. These electronic components are typically encapsulated between sheets of transparent polymer, most frequently by a chemically cross-linked ethylene-vinyl acetate (EVA) copolymer. On the opposite side, the solar cell typically includes a backing material that is intended to electrically isolate the electronic components as well as protect them from environmental degradation. The backing material, for instance, should exhibit moisture resistance and/or heat resistance. The backing material should also be capable of providing some structure and should comprise a material having electrical insulation properties.

In the past, the backing material has comprised various different types of laminates. In one embodiment, for instance, the backing material has comprised an ethylene-vinyl acetate copolymer layer laminated to a polyester film. The ethylene-vinyl acetate copolymer layer exhibits excellent adhesion to the cross-linked EVA encapsulant layer. The polyester film, on the other hand, provides environmental protection and is a very good electrical insulator. Problems have been experienced, however, in achieving a strong and hydrolytically stable adhesive bond between the polyester film and ethylene-vinyl acetate copolymer layer.

In the past, in order to improve the adhesion between the two layers, various different adhesives have been proposed. For example, various prior art constructions are disclosed in U.S. Patent Application Publication No. 2008/0050583 and Japanese Patent Application No. 2006-332091. U.S. Patent Application Publication No. 201010215902, discloses a white adhesive primed polyester film for improved adhesion to the cross-linked ethylene-vinyl acetate encapsulant layer of a solar cell module. The '902 application has provided great advancements in the art. Further improvements, however, are still needed.

WO 2011/117694 describes a composite film comprising: (i) a heatstabilized oriented polyester substrate comprising a UV-absorber in an amount of from about 0.1 to about 10% based on the total weight of the polyester substrate, and (ii) on one or both surfaces of the substrate a polymeric coating layer, which has a thickness in the range of from about 10 nm to about 200 nm, and which comprises an ethylene acrylic acid (EAA) copolymer, wherein the composite film exhibits a shrinkage at 150°C for 30 minutes of less than 0.1% in both the longitudinal and transverse dimensions of the film, and use thereof in the manufacture of photo-voltaic cells.

EP 2 258 551 describes an optical biaxially oriented polyester film comprising a polyester film, a coating layer comprising a cationic polymer which is formed on one surface of the polyester film, and a layer formed on the other surface of the polyester film which is obtained by applying thereonto a coating agent comprising a polyurethane comprising a diol component having a polycarbonate structure, and a heat-crosslinking agent.

EP 2 479 026 describes a biaxially oriented polyester film in the form of a laminated film comprising a biaxially oriented polyester base film having a phosphorus element content of 0 to 170 ppm and a terminal carboxylic acid content of not more than 26 equivalents/t, and a coating layer formed on at least one surface of the biaxially oriented polyester base film which comprises a polyurethane having a polycarbonate skeleton or a polyether skeleton and a crosslinking agent, wherein the laminated film has a haze value of not more than 10%.

EP 2 255 962 describes a polyester film and a coating layer formed on the polyester film by a coating/stretching method, wherein the coating layer comprises a polyurethane resin having a polycarbonate structure and a carboxyl group and exhibiting a glass transition point of not higher than 10°C, and further comprises not more than 20% by weight of a crosslinking agent having a heat-crosslinkable functional group in an amount of not less than 10 mmol/g.

EP 2 479 027 describes a both surfaces-laminated polyester film comprising: a polyester film, a first coating layer which is formed on one surface of said polyester film and comprises a polymer containing ammonium base, an acrylate polymer containing polyethylene glycol and a crosslinking agent, and a second coating layer which is formed on another surface of said polyester film and comprises a polyurethane resin and a crosslinking agent.

JP 2011/116133 describes a laminated film having an easily-adhesive coating layer on the surface of the film, wherein the easily-adhesive coating layer contains a polyurethane resin with a glass transition point of ≤10°C having a polycarbonate structure and a carboxyl group, and further contains a polymer type crosslinking agent having an oxazoline group.

US 2009/214854 discloses a gas barrier laminated film including a resin layer on an inorganic thin film formed on at least one surface of a support film, the resin layer being formed by applying: (1) an aqueous dispersion containing polyvinyl alcohol (a), an ethylene-unsaturated carboxylic acid copolymer (b), and inorganic particles (c); (2) an aqueous dispersion containing an ethylene-unsaturated carboxylic acid copolymer (b), inorganic particles (c), and/or a crosslinking agent (d); or (3) an aqueous dispersion containing polyvinyl alcohol (a), an ethylene-unsaturated carboxylic acid copolymer (b), inorganic particles (c), and a cross-linking agent (d), to the inorganic thin film surface.

### SUMMARY

According to the present invention, the object is achieved by a coated film having the characteristics of claim 1. Further, preferred embodiments are covered by the dependent claims.

The present disclosure is generally directed to a coating that can be applied to a polyester film for improving adhesion between the polyester film and a second polymeric layer. The invention is particularly effective when utilized to bond a polyethylene terephthalate sheet to a cross-linked ethylene-vinyl acetate copolymer. Of particular advantage, the adhesive coating is particularly resistant to degradation caused by weathering, and is capable of retaining a relatively large amount of its initial bond strength between the two layers even after exposure for many hours to an environment at a relatively high temperature and at relatively high humidity levels. The coated polyester film is particularly well suited for use in constructing backing materials for solar cells, solar modules and solar arrays. It should be understood, however, that the coated polyester film also has numerous other uses.

Of particular advantage, the coating composition of the present disclosure has also demonstrated excellent adhesion to polyester films that contain various fillers. For example, the polyester film contains white pigment particles, comprising barium sulfate. The white pigment particles are added to the film, to provide the film with a white color, such that the film has a Berger whiteness of greater than 70, such as greater than 75, such as greater than 80. The white pigment particles are included in the film so that the film has desired reflectance properties, especially when the film is used in conjunction with a photovoltaic device. The white pigment particles, however, may have a tendency to interfere with the ability of a coating to bond the film to an opposing film or surface. The coating composition of the present disclosure, however, has been found to be an effective bonding agent even when the polyester film contains the white pigment particles.

In general, the coating applied to the polyester film comprises a polymer component combined with a cross-linking agent. The polymer component comprises, an alkylene carboxylic copolymer preferably an ethylene acrylic acid copolymer, an ethylene methacrylic acid copolymer, or a phenoxy resin. The cross-linking agent, on the other hand, comprises an oxazoline polymer.

The film is biaxially stretched. In order to form the coating on the first side of the film, a coating composition is dispersed in a liquid carrier and can be applied to the film prior to complete stretching of the film. For instance, in one embodiment, the coating dispersion can be applied prior to stretching the film in the cross-direction. During stretching, the coating composition is heated and consolidated to form a coating on the film.

The polyester film of the invention may be bonded to a second polymer film. The second polymer film, in one embodiment, contains a cross-linkable ethylene-vinyl acetate copolymer. In other embodiments, however, the second polymer film may contain various other polymers. For example, the second polymer film may comprise a polyolefin polymer, such as a low density polyethylene, polypropylene, or copolymers thereof. In still other embodiments, the second polymer film may comprise an ionomer or may comprise a thermoplastic elastomer. The laminate, for instance, may be used as a backing material for solar cells. In accordance with the present disclosure, the polyester film is attached to the second polymer film by applying the coating between the two layers as described above.

The coating or bonding layer is capable of forming strong bonds between the polyester film and the second polymer film. For instance, the initial bond strength between the polyester film and the second polymer film can be at least about 60 N/25 mm.

In addition to having excellent initial bond strength characteristics, the bonding layer is also capable of retaining its bond strength between the layers even after exposure to relatively high temperatures and to relatively high humidity levels for extended periods of time. For example, in one embodiment, the bond strength between the polyester film and the second polymer film is at least about 25% of the initial bond strength, such as at least about 40% of the initial bond strength after exposure to an environment at 100% relative humidity at 121°C for 24 hours.

The above described laminate can be used as a backing layer for photovoltaic devices. In one embodiment, for instance, the photovoltaic device includes a layer comprised a semiconductor material that is capable of converting light energy into an electric current. The semiconductor material can be covered by a transparent panel, such as a glass panel that allows light energy to reach the semiconductor material while providing protection. On the opposite side of the semiconductor material, the photovoltaic device can include a backing layer comprising an adhesively primed PET sheet or laminate as described above.

Other features and aspects of the present disclosure are discussed in greater detail below.

### BRIEF DESCRIPTION OF THE DRAWINGS

A full and enabling disclosure of the present invention, including the best mode thereof to one skilled in the art, is set forth more particularly in the remainder of the specification, including reference to the accompanying figures, in which:
Figure 1 is a perspective view of one embodiment of a photovoltaic device that may be made in accordance with the present disclosure;
Figure 2 is a plan view of the back side of the photovoltaic device shown in Figure 1;
Figure 3 is a cross-sectional view of one embodiment of a photovoltaic device including a composite backing layer made in accordance with the present disclosure;
Figure 4 is a cross-sectional view of one embodiment of a coated polymer film made in accordance with the present disclosure; and
Figures 5A and 5B are a plan view and a side view respectively of a sample preparation for conducting the peel test as described hereinafter.

Repeat use of reference characters in the present specification and drawings is intended to represent the same or analogous features or elements of the present invention.

### DETAILED DESCRIPTION

It is to be understood by one of ordinary skill in the art that the present discussion is a description of exemplary embodiments only, and is not intended as limiting the broader aspects of the present invention.

The present disclosure is directed to a coated polyester film. The coating contained on the film is for attaching the film to other substrates or layers. For example, the coating is particularly well suited for attaching a polyester film to a layer containing a cross-linked ethylene-vinyl acetate copolymer. Cross-linkable ethylene-vinyl acetate compositions are known to those skilled in the art. Exemplary examples include F806 EVA offered by Hangzhou First PV Material Company and Photocap 14520P/UF offered by Specialized Technology Resources, Inc. Although the coated film may be used in numerous applications, in one embodiment, the film can be laminated to a layer containing a cross-linked ethylene-vinyl acetate copolymer and used as a composite backing material for a photovoltaic device.

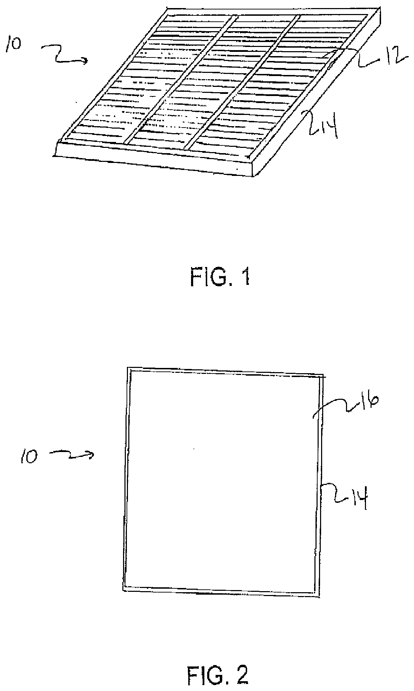

Referring to Fig. 1, for exemplary purposes only, a photovoltaic device 10 is illustrated. The photovoltaic device 10 can include one or more solar cells that are well suited to converting light energy, such as sunlight, into electricity.

In the embodiment illustrated in Fig. 1, the photovoltaic device 10 includes a semiconductor material 12 contained within a frame 14. The semiconductor material 12 is contained behind a transparent protective layer, such as a glass layer. An anti-reflective coating can be positioned in between the glass layer and the semiconductor material. The anti-reflective coating may be present in order to reduce the amount of light that is reflected and not used by the photovoltaic device. The transparent cover plate protects the device from the elements.

As shown, the semiconductor material 12 is divided into individual elements which may be considered individual solar cells. The semiconductor material 12 can be made from any suitable material capable of converting light energy into electricity. For instance, suitable materials that may be used to form the semiconductor material 12 may comprise crystalline or amorphous silicon, alloys of copper-indium-gallium-selenide (CIGS), cadmium telluride, gallium arsenide, or blend of organic semi-conducting materials.

In one embodiment, the semiconductor material 12 may comprise two different layers: (1) an N-type semiconductor material layer, and (2) a P-type semiconductor material layer. For example, in one embodiment, both layers can be made from silicon. The two layers form a P-N junction photodiode. When exposed to sunlight, electrons may flow from the P-type layer to the N-type layer. When connected to an external current path, an electric current is then established, which can be conducted away from the photovoltaic device and used as desired. In this regard, the photovoltaic device can include a contact grid that establishes electrical connections.

Photovoltaic devices such as the one illustrated in Fig. 1 and various other solar panels are typically placed in outside environments at locations where there is ample amount of sunlight. Such environments typically have warm to hot temperatures. The environments can also be relatively humid. In order to protect the photovoltaic device from the elements, in addition to a top transparent plate, the devices typically include a composite backing material. In the past, backing materials have included a layer containing an ethylene-vinyl acetate copolymer laminated to a polymer film, such as a polyester film. The backing material electrically isolates the active components of the solar cell from the conducting wires and ground, and protects the internal components from environmental degradation and mechanical abuse. The backsheet layer can also act to reflect incident light back onto the active components, further increasing the efficiency of the device.

Referring to Fig. 2, for instance, the back side of the photovoltaic device 10 is shown. As illustrated, the photovoltaic device includes a composite backing material 16 contained within the frame 14. In the past, various problems have been experienced in securely bonding polymer films, such as polyester films, to other polymeric films. In this regard, the present disclosure is directed to a bonding layer that can be placed between the two materials for greatly improving adhesion, especially when the backing material is subjected to higher temperatures at humid conditions for extended periods of time.

In addition to displaying excellent adhesion properties at high temperatures and under humid conditions, the bonding layer of the present disclosure is also capable of bonding together a polyester film that contains a relatively great amount of inorganic pigment particles to an opposing polymer film. For example, in the past, loading the polyester film with desired amounts of pigment particles and other filler particles resulted in a surface morphology with a diminished ability to form bonds with an adhesive coating or other polymer layer. White pigment particles are typically added to the polyester film so that the film will reflect light when used with a photovoltaic device. Of particular advantage, the bonding layer of the present disclosure is particularly well suited for bonding polyester films to other polymer film layers even when the polyester film contains pigment particles, such as barium sulfate particles.

In one embodiment, the bonding material of the present disclosure can be applied to the polymer film as a coating prior to laminating the film to a polymeric layer. In general, the bonding material can be used to bond numerous different polymeric films together. For example, in one embodiment, the bonding material can be used to bond together a polyester film to a layer containing a cross-linked ethylene-vinyl acetate copolymer. In other embodiments, the polymeric layer may comprise any suitable thermoplastic polymer, such as a polyolefin. For instance, the polymeric layer may comprise a polyethylene, such as linear low density polyethylene, a polypropylene, mixtures thereof, and copolymers thereof. In other embodiments, the polymeric layer may contain one or more ionomers or elastomers.

The bonding material of the present disclosure exhibits excellent initial bond strength to both PET and the second polymer layer, as well as excellent retained bond strength after exposure to highly accelerated stress test (HAST) conditions. It is believed that good initial bond strength is achieved due to good mechanical and chemical compatibility between the bonding material and polymer layer as well as many strong covalent bonds with both the polymer layer and the surface of the PET. HAST testing is conducted to simulate over a short time frame the long term effects of environmental aging. It is believed that the excellent retained bond strength after HAST testing results from the strong, hydrolytically stable bonds produced when the coating reacts with the surface of the PET and the polymer layer. Further, it is believed that the hydrophobic nature of the components utilized in the bonding layer minimize the solubility and concentration of water molecules at bonding interfaces during HAST aging, further enhancing the hydrolytic stability of the bonding interfaces.

The bonding material of the present disclosure exhibits excellent initial bond strength. For example, the initial bond strength or peel strength between the polymer film layer and the layer containing the cross-linked ethylene-vinyl acetate copolymer can be greater than about 50 N/25 mm, such as greater than about 60 N/25 mm, such as greater than about 70 N/25 mm. In one embodiment, for instance, the initial bond strength can be from about 35 N/25 mm to about 80 N/25 mm.

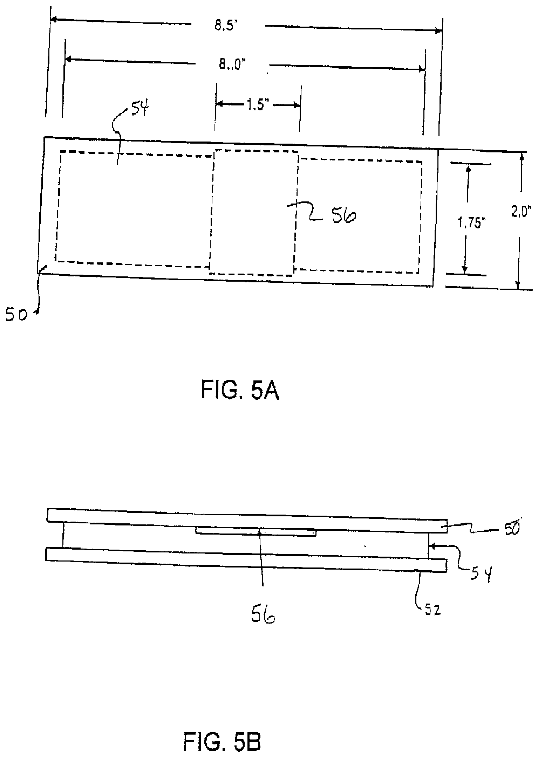

In order to determine the peel strength of a bonding material in accordance with the present disclosure, a sample as shown in Figs. 5A and 5B is first prepared. As illustrated, the sample includes a cross-linkable ethylene-vinyl acetate layer 54 positioned in between two polyester film layers 50 and 52. A release sheet 56 is placed in between the polyester film layer 50 and the ethylene-vinyl acetate layer 54. The release sheet can comprise, for instance, a fabric coated with a fluorocarbon such as TEFLON polymer.

Once the layers are brought together as shown in Figs. 5A and 5B, the sample is placed in vacuum press for lamination. The laminate is subjected to a vacuum for 1.5 minutes, and then sample is held under vacuum as 1 bar of atmospheric pressure is applied for 19.5 minutes. During this cycle the laminate is heated from room temperature to 150°C, and held at 150°C for approximate 18 minutes. During this heating cycle, the cross-linking component of the EVA is activated, and the EVA layer is cross-linked. At the end of the cycle, the press is opened and the laminate is removed and cooled.

Once the laminate sample is prepared as shown in Fig. 5A, it is cut into 25 mm wide test strips. By including the release sheet 56 in the sample, an adhesionfree edge of the polyester film 50 is obtained in each test strip.

Each test strip is then placed in an Instron tensile testing machine. In particular, the free edge of the polyester film 50 where the release sheet 56 is located is placed in one jaw and the opposing portion of the sample comprised of the ethylene-vinyl acetate layer 54 and the polyester film 52 is placed in the opposite jaw. An aluminum backing plate is fixed in the upper grip adjacent to the upper portion of the PET laminate. This plate hangs down behind the peel specimen and forces the tab comprising the adhesively bonded material to bend down parallel to the clamped tabs. The Instron machine is set at a rate of 100 mm per minute, and a 180° peel test is performed. Average peel force is recorded when steady state conditions are achieved. The machine indicates a peel strength in Newtons of force per 25 mm of laminate width. At least 6, but typically 8-10 peel tests are conducted for each laminate to determine an average peel force.

In addition to displaying good initial bond strengths, the bonding material of the present disclosure is also capable of retaining a significant portion of the initial bond strength even when subjected to HAST aging. For instance, the bonding material is capable of retaining at least 25% of its initial bond strength even when exposed to an environment at 121°C and 100% RH for 24 hr. For instance, the bonding material may retain greater than 30%, such as greater than 40%, such as even greater than 50% of its initial bond strength when subjected to the above conditions.

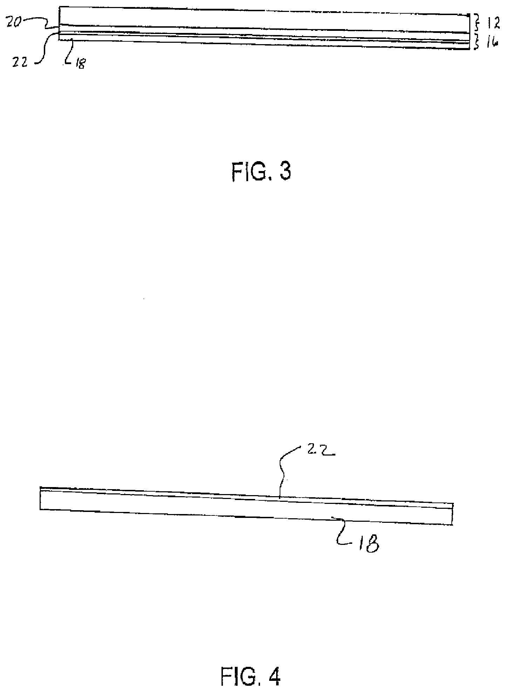

Referring to Fig. 3, one embodiment of a backing material 16 made in accordance with the present disclosure is illustrated. As shown, the backing material 16 is positioned adjacent to the cross-linked EVA which encapsulates the semiconductor material 12 contained within a photovoltaic device.

As illustrated, the backing material 16 is a polymer film 18, which comprises a polyester film. In order to attach the polymer film 18 to the layer 20, a bonding layer 22 is positioned in between the layer 20 and the polymer film 18. As shown in Fig. 4, in one embodiment, the bonding layer 22 may comprise a coating which is applied to the polymer film 18 prior to laminating the film to the layer containing the ethylene-vinyl acetate copolymer.

In accordance with the present disclosure, the bonding layer 22 comprises a polymer component combined with a cross-linking agent. The polymer component comprises an alkylene carboxylic acid copolymer. For instance, the alkylene carboxylic acid copolymer may be ethylene based. Preferred examples of alkylene carboxylic acid copolymers include ethylene-acrylic acid copolymers, ethylenemethacrylic acid copolymers and phenoxy resin.

As described above, the polymer component is combined with a crosslinking agent. The cross-linking agent comprises at least one water-miscible or water-dispersible component which bears reactive groups which can enter into cross-linking reactions, namely polymers with oxazoline groups. As used herein, the above polymers are referred to as oxazoline polymers.

Polymers containing oxazoline groups are macromolecular compounds which form through addition polymerization of a) oxazoline derivatives according to the structural formulae (I) to (III) and b) at least one further comonomer.

In the structural formulae (I) to (III) depicted above, the R1, R2, R3 and R4 radicals may each independently represent hydrogen atoms, halogen atoms, alkyl groups, aralkyl groups, phenyl groups or substituted phenyl groups. R5 is a noncyclic radical which contains a polymerizable double bond.

Examples of halogen atoms are fluorine, chlorine, bromine and iodine, preference being given to chlorine and bromine. Examples of alkyl groups are methyl, ethyl, n-propyl, isopropyl, n-butyl, isobutyl, pentyl and hexyl groups. Aralkyl groups are understood to mean those radicals which contain alkyl groups with a chain length of 1 to 5 carbon atoms, for example benzyl, phenethyl, benzhydryl and naphthylmethyl groups. Substituted phenyl groups may, for example, be chlorophenyl, bromophenyl, methoxyphenyl, ethoxyphenyl, methylaminophenyl, ethylaminophenyl, dimethylaminophenyl, methylethylaminophenyl and diethylaminophenyl. Examples of noncyclic radicals with polymerizable double bonds are vinyl and isopropenyl groups.

Examples of oxazoline derivatives a) include 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline and 2-isopropenyl-5-ethyl-2-oxazoline. To prepare polymers bearing oxazoline groups, it is possible to use the oxazoline derivatives a) either individually or in a combination of two or more of the compounds mentioned. Among the oxazoline derivatives mentioned, 2-isopropenyl-2-oxazoline is particularly preferred.

The comonomers b) used may in principle be all compounds which are copolymerizable with oxazoline derivatives a). Examples of comonomers b) are methacrylic esters such as methyl methacrylate, butyl methacrylate and 2-ethylhexyl methacrylate, unsaturated carboxylic acids such as methacrylic acid, itaconic acid and malonic acid, unsaturated nitriles such as methacrylonitrile, unsaturated amides such as methacrylamide and N-methylolmethacrylamide, vinyl esters such as vinyl acetate and vinyl propionate, vinyl ethers such as methyl vinyl ether, ethyl vinyl ether, alpha-olefins such as ethene, propene, halogenated alpha, beta-unsaturated compounds such as vinyl chloride, vinylidene chloride and vinyl fluoride, and also alpha,beta-unsaturated aromatic compounds such as styrene and alpha-methylstyrene. The comonomers b) mentioned may be used either individually or in a combination of 2 or more compounds.

The polymer containing oxazoline groups can be prepared, for example, by adding an oxazoline derivative a), at least one comonomer b) and a free-radical initiator, for example benzoyl peroxide or azoisobutyronitrile, to a suitable water-miscible organic solvent and heating the resulting solution. After the polymerization has ended, water can be added and the organic solvent can be removed completely or partially by distillation, which leaves an aqueous polymer dispersion containing oxazoline groups, which is directly suitable for preparation of the inventive coating solution.

Alternatively, it is also possible to polymerize oxazoline derivative(s) a) and comonomer(s) b) anionically, for example with n-butyllithium.

The content of oxazoline groups in the dried polymer is typically 0.5 to 10 mmol/g, preferably 1.5 to 8 mmol/g. The glass transition temperature of the dried polymer is in the range between 0 and 100°C., preferably 20 to 95°C.

Suitable aqueous polymer dispersions containing oxazoline groups are commercially available under the name "EPOCROS^{®}" from Nippon Shokubai (Japan). In this context, water-soluble, solvent-free products of the "EPOCROS^{®}WS" series from the abovementioned manufacturer are particularly suitable for the inventive coating solution.

In addition to the polymer component and the cross-linking agent, the coating composition may contain various other ingredients. In one embodiment, for instance, the coating may contain one or more antiblocking agents. For example, the antiblocking agent may comprise inorganic and/or organic particles. Particular examples of antiblocking agents include silicone dioxide, calcium carbonate, and aluminum oxide.

The relative amounts of the components in the bonding layer or coating can vary depending upon various factors. In one embodiment, for instance, the polymer component may be contained in the coating or bonding layer in an amount from about 40% to about 99% by weight, such as from about 60% to about 99% by weight. The coupling agent, on the other hand, may be present in the coating in an amount from about 0.01% to about 40% by weight, such as from about 0.1% to about 30% by weight.

The dried coating on the polyester film can generally have a thickness from about 5 nm to about 500 nm. For instance, the dried coating can have a thickness from about 10 nm to about 100 nm, such as from about 10 nm to about 60 nm. The polyester film, on the other hand, can typically have a thickness of from about 127 µm (5 mils) to about 381 µm (15 mils).

The bonding layer may be formed on the polymer film using any suitable technique or method. In one embodiment, the components of the bonding layer are contained in an aqueous composition and applied to the polymer film while the polymer film is being formed. The coating composition, for instance, can have about 5% to about 30% solids, such as from about 12% to about 25% solids.

In the embodiment illustrated in Fig. 4, only one side of the polymer film 18 is coated with the bonding layer 22. It should be understood, however, that in other embodiments both sides of the polymer film may be coated. In this manner, the polymer film can be laminated to the same or different substrates on either side. When forming photovoltaic devices, for instance, it may be useful to coat both sides of the polymer film in order to bond the film to a layer containing an ethylene-vinyl acetate copolymer on one side and to various electrical devices, such as a junction box, on the opposing side. The junction box, for instance, may be used in order to direct the electric current being created by the photovoltaic device to a downstream end use.

The polymer film 18 as shown in Fig. 4 comprises a polyester film. Polyester films are particularly well suited for use in the present disclosure. The polyester used to construct the film may comprise polyethylene terephthalate, polyethylene naphthalate or polybutylene terephthalate. The polymer film may also comprise copolyesters, such as polyethylene terephthalate isophthalate. Generally, any polyester film based on a polymer resulting from polycondensation of a glycol or diol with a dicarboxylic acid (or its ester equivalent) such as terephthalic acid, isothalic acid, sebacic acid, malonic acid, adipic acid, azelaic acid, glutaric acid, suberic acid, succinic acid, or mixtures thereof. Suitable glycols include ethylene glycol, diethylene glycol, polyethylene glycol, and polyols such as butanediol and the like. Mixtures of two or more of the foregoing are also suitable.

Any of the above based polymer films can contain conventional additives such as antioxidants, delusterants, pigments, fillers such as silica, calcium carbonate, kaolin, titanium dioxide, antistatic agents and the like or mixtures thereof. In the film according to the invention a filler s present in the polymer film sufficient to colorize the film and increase the opacity of the film. The film includes a filler to make the film have a white appearance. The filler that is used is barium sulfate. Barium sulfate may be present in the film in an amount from about 5% to about 30% by weight, such as from about 15% to about 25% by weight.

For a further increase in the whiteness, suitable optical brighteners can optionally be added to the pigmented film (in a multilayer structure preferably to the pigmented layers). Suitable optical brighteners are, for example, HOSTALUX^{®} KS (from Clariant, Germany) or EASTOBRIGHT^{®} OB-1 (from Eastman, USA).

The film may comprise further particles as antiblocking agents in one or more layers. Typical antiblocking agents are inorganic and/or organic particles, for example silicon dioxide (precipitated or fumed), calcium carbonate, magnesium carbonate, barium carbonate, calcium sulfate, lithium phosphate, calcium phosphate, magnesium phosphate, kaolin (hydrated or calcined), aluminum oxide, aluminum silicates, lithium fluoride, calcium salts, barium salts, zinc salts or manganese salts of the dicarboxylic acids used, or cross-linked polymer particles, for example polystyrene or polymethyl methacrylate particles.

In addition, it is also possible to select mixtures of two or more particle systems or mixtures of particle systems with the same chemical composition but different particle size as antiblocking agent.

When particles are present as antiblocking agents in a layer of the film, the total concentration of these particles is less than 20% by weight, based on the total weight of the modified layer, preferably less than 15% by weight and more preferably less than 5% by weight. The particles have a mean size of 0.01 to 15 µm, preferably 0.03 to 10 µm and more preferably 0.05 to 5 µm.

The film may comprise further additives such as UV stabilizers, flame retardants, hydrolysis stabilizers and antioxidants.

UV stabilizers, i.e. UV absorbers as light stabilizers, are chemical compounds which can intervene in the physical and chemical processes of lightinduced polymer degradation. Suitable UV stabilizers are, for example, 2-hydroxybenzophenones, 2-hydroxybenzotriazoles, organonickel compounds, salicylic esters, cinnamic ester derivatives, resorcinol monobenzoates, oxanilides, hydroxybenzoic esters, benzoxazinones, sterically hindered amines and triazines, preference being given to the 2-hydroxybenzotriazoles, the benzoxazinones and the triazines. In a very particularly preferred embodiment, the inventive film comprises, as a UV stabilizer, 0.1 to 5.0% by weight of 2-(4,6-diphenyl[1,3,5]triazin-2-yl)-5-hexyloxyphenol of the formula 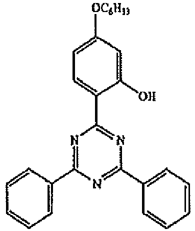 or 0.1 to 5.0% by weight of 2,2'-methylenebis[6-benzo-triazol-2-yl]-4-(1,1,2,2-tetramethylpropyl)phenol of the formula 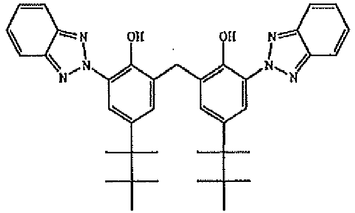 or 0.1 to 5.0% by weight of 2,2'-(1,4-phenylene)bis([3,1]benzoxazin-4-one) of the formula

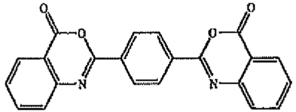

In a further embodiment, it is also possible to use mixtures of these UV stabilizers or mixtures of at least one of these UV stabilizers with other UV stabilizers, where the total concentration of light stabilizers is preferably between 0.1 and 5.0% by weight, more preferably in the range from 0.5 to 3.0% by weight, based on the weight of the film.

The films may be produced by any well known technique in the art. For example, polyester is typically melted and extruded as an amorphous sheet onto a polished revolving casting drum to form a cast sheet of the polymer. The sheet is quickly cooled and then stretched or oriented in one or more directions to impart strength and toughness to the film. For instance, the sheet can be uniaxially stretched or biaxially stretched.

During extrusion, the temperature of the film is generally below about 300°C. For instance, the temperature during extrusion can be from about 275°C to about 295°C.

Stretching of the film can generally occur as the film is being produced, although stretching can also be conducted offline. Biaxial stretching, for instance, is generally carried out in succession, but can take place simultaneously. When done in succession, stretching typically first takes place longitudinally (in the machine direction) and then transversely (in the transverse direction perpendicular to the machine direction). Stretching the film leads to spatial orientation of the polymer chains. The longitudinal stretching can be carried out with the aid of two rolls rotating at different speeds corresponding to the desired stretching ratio. For the transverse stretching, an appropriate tenter frame can be used in which the film is clamped at the two edges and then drawn towards the two sides at an elevated temperature.

Generally, stretching occurs at a temperature range of from about the second order transition temperature of the polymer to below the temperature at which the polymer softens and melts. In one embodiment, for instance, longitudinal stretching can be carried out at a temperature in the range of from about 80°C to about 130°C, while the transverse stretching can be carried out at a temperature in the range of from about 90°C to about 150°C.

The longitudinal stretching ratio can generally be in the range of from about 2:1 to about 6:1, such as from about 2:1 to about 5:1. The transverse stretching ratio is also generally from about 2:1 to about 6:1, such as from about 3:1 to about 5:1.

Where necessary, the film can be further heat treated after stretching to lock-in the properties by further crystallizing the film. The crystallization imparts stability and good tensile properties to the film. Heat treatment, for instance, can generally be conducted at a temperature of from about 150°C to about 250°C, such as from about 190°C to about 240°C. Coated films of the present disclosure, for instance, can be exposed to heat at a temperature of from about 210°C to about 250°C for a period of from about 1 to about 20 seconds.

The polymer film can generally have a thickness of from about 51 µm (2 mils) to about 381 µm (15 mils), such as from about 51 µm (2 mils) to about 254 µm (10 mils), such as from about 51 µm (2 mils) to about 203 µm (8 mils).

In order to coat the film in accordance with the present disclosure, in one embodiment, the coating composition is applied to the film in-line. In particular, the coating composition is applied to the film while the film is being produced and before the film has been completely stretched or heat set. For instance, in one embodiment, the coating composition can be applied to the polymer film after corona treatment and prior to stretch orientation. In one particular embodiment, for instance, the coating composition can be applied to the film in-line by means of an aqueous dispersion after the longitudinal stretching step but prior to the transverse stretching step.

In addition to in-line coating, the coating composition can also be applied to the film off-line. Thus, the coating composition can be applied to the film after the film has been produced and cooled. When coating both sides of the film, for instance, one side of the film can be coated in-line, while the other side of the film can be coated off-line.

The resulting coated film can be used in numerous and different applications. As shown in Figs. 1-3, for instance, in one embodiment the film can be laminated to a layer containing a cross-linked ethylene-vinyl acetate copolymer and used as a backing material for a photovoltaic device. It should be appreciated, however, that the coated film can be laminated to other various devices and structures.

### Example 1

18% barium sulfate-filled PET pellets were introduced into a single screw extruder where they were heated and compressed into a melt state. This melt was extruded through a slot die and cast onto a casting roll kept at about 20°C, where it solidified into an amorphous preliminary film. The preliminary film was longitudinally stretched at 95°C at a stretching ratio of 3.6:1. The stretched film was passed under a corona treater (Enercon Industries) and corona treated at 1.5 W/ft².min. Subsequently, the longitudinally stretched film was coated by means of a reverse gravure coating roll with an aqueous dispersion containing 20% solids content by weight, which contained 50% by weight Michem Prime 4983R (Michelman) ethylene -acrylic acid copolymer dispersion and 50% by weight EPOCROS WS700 (Nippon Shokubai, Japan) oxazoline crosslinker based on the dried coating. The longitudinally dried film was then dried at around 100°C, and then stretched transversely in a stretching ratio of 4.3:1, so as to obtain a biaxially oriented film. The biaxially stretched film was heat set at 230°C. The final film thickness was 250µm. The thickness of the dried coating was calculated from the solids content of the coating formulation, the coating thickness (wet) and the transverse stretching factor to be 55nm.

The coated film was incorporated in a laminate structures by the procedures taught in this disclosure. Peel test laminates were produced using both F806 EVA (Hangzhou First PV Material Company) and Photocap 14520P/UF EVA (Specialized Technology Resources, Inc.). Peel tests were conducted on test coupons as produced above. Test coupons were also subjected to HAST aging at 121°C and 100% RH for 24 hr and then tested for retained adhesive strength by the procedure taught in this disclosure. Average peel force for initial adhesion and retained adhesion are summarized in Table 1. The coated film exhibits very good adhesion to the cross-linked EVA layers initially and good retained adhesion after the HAST aging procedure.

### Example 2

18% barium sulfate-filled PET pellets were introduced into a single screw extruder where they were heated and compressed into a melt state. This melt was extruded through a slot die and cast onto a casting roll kept at about 20°C, where it solidified into an amorphous preliminary film. The preliminary film was longitudinally stretched at 95°C at a stretching ratio of 3.6:1. The stretched film was passed under a corona treater (Enercon Industries) and corona treated at 1.5 W/ft².min. Subsequently, the longitudinally stretched film was coated by means of a reverse gravure coating roll with an aqueous dispersion containing 20% solids content by weight, which contained 50% by weight Michem Prime 4983R (Michelman) ethylene -acrylic acid copolymer dispersion and 50% by weight EPOCROS WS700 (Nippon Shokubai, Japan) oxazoline crosslinker based on the dried coating. The longitudinally dried film was then dried at around 100°C, and then stretched transversely in a stretching ratio of 4.3:1, so as to obtain a biaxially oriented film. The biaxially stretched film was heat set at 230°C. The final film thickness was 125µm. The thickness of the dried coating was calculated from the solids content of the coating formulation, the coating thickness (wet) and the transverse stretching factor to be 55nm.

The coated film was incorporated in a laminate structures by the procedures taught in this disclosure. Peel test laminates were produced using both F806 EVA (Hangzhou First PV Material Company) and Photocap 14520P/UF EVA (Specialized Technology Resources, Inc.). Peel tests were conducted on test coupons as produced above. Test coupons were also subjected to HAST aging at 121°C and 100% RH for 24 hr and then tested for retained adhesive strength by the procedure taught in this disclosure. Average peel force for initial adhesion and retained adhesion are summarized in Table 1. The coated film exhibits very good adhesion to the cross-linked EVA layers initially and good retained adhesion after the HAST aging procedure.

### Example 3

18% barium sulfate-filled PET pellets were introduced into a single screw extruder where they were heated and compressed into a melt state. This melt was extruded through a slot die and cast onto a casting roll kept at about 20°C, where it solidified into an amorphous preliminary film. The preliminary film was longitudinally stretched at 95°C at a stretching ratio of 3.6:1. The stretched film was passed under a corona treater (Enercon Industries) and corona treated at 1.5 W/ft².min. Subsequently, the longitudinally stretched film was coated by means of a reverse gravure coating roll with an aqueous dispersion containing 22% solids content by weight, which contained 15% by weight PKHW-38 phenoxy resin (InChem Corp.) copolymer dispersion and 85% by weight EPOCROS WS700 (Nippon Shokubai, Japan) oxazoline crosslinker based on the dried coating. The longitudinally dried film was then dried at around 100°C, and then stretched transversely in a stretching ratio of 4.3:1, so as to obtain a biaxially oriented film. The biaxially stretched film was heat set at 230°C. The final film thickness was 250µm. The thickness of the dried coating was calculated from the solids content of the coating formulation, the coating thickness (wet) and the transverse stretching factor to be 55nm.

The coated film was incorporated in a laminate structures by the procedures taught in this disclosure. Peel test laminates were produced using both F806 EVA (Hangzhou First PV Material Company) and Photocap 14520P/UF EVA (Specialized Technology Resources, Inc.). Peel tests were conducted on test coupons as produced above. Test coupons were also subjected to HAST aging at 121°C and 100% RH for 24 hr and then tested for retained adhesive strength by the procedure taught in this disclosure. Average peel force for initial adhesion and retained adhesion are summarized in Table 1. The coated film exhibits very good adhesion to the cross-linked EVA layers initially and good retained adhesion after the HAST aging procedure.

### Example 4

18% barium sulfate-filled PET pellets were introduced into a single screw extruder where they were heated and compressed into a melt state. This melt was extruded through a slot die and cast onto a casting roll kept at about 20°C, where it solidified into an amorphous preliminary film. The preliminary film was longitudinally stretched at 95°C at a stretching ratio of 3.6:1. The stretched film was passed under a corona treater (Enercon Industries) and corona treated at 1.5 W/ft².min. Subsequently, the longitudinally stretched film was coated by means of a reverse gravure coating roll with an aqueous dispersion containing 22% solids content by weight, which contained 15% by weight PKHW-38 phenoxy resin (InChem Corp.) copolymer dispersion and 85% by weight EPOCROS WS700 (Nippon Shokubai, Japan) oxazoline crosslinker based on the dried coating. The longitudinally dried film was then dried at around 100°C, and then stretched transversely in a stretching ratio of 4.3:1, so as to obtain a biaxially oriented film.

The biaxially stretched film was heat set at 230°C. The final film thickness was 125µm. The thickness of the dried coating was calculated from the solids content of the coating formulation, the coating thickness (wet) and the transverse stretching factor to be 55nm.

The coated film was incorporated in a laminate structures by the procedures taught in this disclosure. Peel test laminates were produced using both F806 EVA (Hangzhou First PV Material Company) and Photocap 14520P/UF EVA (Specialized Technology Resources, Inc.). Peel tests were conducted on test coupons as produced above. Test coupons were also subjected to HAST aging at 121°C and 100% RH for 24 hr and then tested for retained adhesive strength by the procedure taught in this disclosure. Average peel force for initial adhesion and retained adhesion are summarized in Table 1. The coated film exhibits very good adhesion to the cross-linked EVA layers initially and good retained adhesion after the HAST aging procedure.

### Comparative Example 1

WSAC PET film (Mitsubishi Polyester Films Inc.) a 250µm, white coated PET that is commercially sold as a backsheet material for PV modules was incorporated into a laminate structure by the procedures taught in this disclosure. Peel test laminates were produced using both F806 EVA (Hangzhou First PV Material Company) and Photocap 14520P/UF EVA (Specialized Technology Resources, Inc.). Peel tests were conducted on test coupons as produced above. Test coupons were also subjected to HAST aging at 121°c and 100% RH for 24 hr and then tested for retained adhesive strength by the procedure taught in this disclosure. Average peel force for initial adhesion and retained adhesion are summarized in Table 1. The coated film exhibits good adhesion to the cross-linked EVA layers initially and but poor retained adhesion after the HAST aging procedure.

| | | **Intial Adhesion** | | | **HAST Aged 24 hr@121°C** | |
|---|---|---|---|---|---|---|
| | **Film Thickness (microns)** | **Photocap 14520P/UF EVA (N/cm)** | **F806 FIRST EVA (N/cm)** | | **Photocap 14520P/UF EVA (N/cm)** | **F806 FIRST EVA (N/cm)** |
| **Example #1** | 1000 | 80 | 72 | | 22 | 18 |
| **Example #2** | 500 | 56 | 65 | | 27 | 24 |
| **Example #3** | 1000 | 38 | 75 | | 52 | 20 |
| **Example #4** | 500 | 37 | 50 | | 44 | 25 |
| **Comparative Example #1** | 1000 | 61 | 50 | | 3 | 5 |

## Claims

1. A coated film comprising:
a polyester film having a first side and a second side, the polyester film having been biaxially stretched; and
a coating on the first side of the polyester film, the coating comprising a polymer component and a cross-linking agent, the polymer component comprising an alkylene carboxylic acid copolymer, preferably an ethylene acrylic acid copolymer or an ethylene methacrylic acid copolymer or a phenoxy resin, the cross-linking agent comprising an oxazoline polymer wherein the polyester film contains white pigment particles comprising barium sulfate, sufficient to provide the film with a white color.

2. A coated film as defined in claim 1, wherein the polyester film has a thickness of from 51 µm (2 mils) to 381 µm (15 mils) and the coating has a thickness of from 10 nm to 60 nm.

3. A white polyester film as defined in claim 1, wherein the polymer component contained in the coating comprises an ethylene acrylic acid copolymer, or an ethylene methacrylic acid copolymer.

4. A white polyester film as defined in claim 1, wherein the polymer component contained in the coating comprises an ethylene acrylic acid copolymer and wherein the cross-linking agent contained in the coating comprises an oxazoline polymer.

5. A white polyester film as defined in claim 4, wherein the cross-linking agent comprises an oxazoline polymer formed from
a. at least one oxazoline derivative according to one of the structural formulae (I) to (III) and
b. at least one further comonomer, 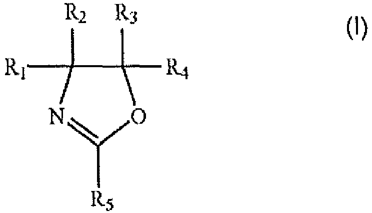 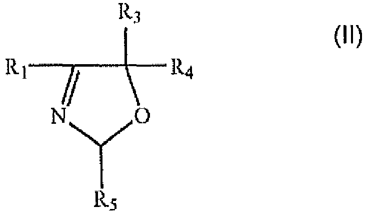 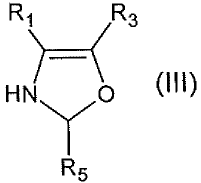
where the R₁, R₂, R₃ and R₄ radicals in the structural formulae (I) to (III) each independently represent hydrogen atoms, halogen atoms, alkyl groups, aralkyl groups, phenyl groups or substituted phenyl groups, and
R₅ is a noncyclic radical with a polymerizable double bond.

6. A white polyester film as defined in claim 5, wherein the comonomer (b) comprises one or more of the following compounds: methacrylic esters, unsaturated carboxylic acids, unsaturated nitrites, unsaturated amides, vinyl esters, vinyl ethers, alpha-olefins, halogenated alpha,beta-unsaturated compounds or alpha, beta-unsaturated aromatic compounds.

7. A white polyester film as defined in claim 1, wherein the polymer component contained in the coating comprises a phenoxy resin.

8. A photovoltaic device comprising:
a solar cell having a back panel, the back panel comprising the white polyester film of claim 7 laminated to a cross-linked ethylene vinyl acetate layer.

9. A white polyester film as defined in claim 1, wherein the polyester film is made from polyethylene terephthalate.

10. A white polyester film as defined in claim 1, wherein the polymer component comprises an ethylene acrylic acid copolymer and the cross-linking agent comprises an oxazoline polymer, the coating having a thickness of from 10 nm to 60 nm.

## Patentansprüche

1. Beschichtete Folie, umfassend:
eine Polyesterfolie mit einer ersten Seite und einer zweiten Seite, wobei die Polyesterfolie biaxial gestreckt wurde; und
eine Beschichtung auf der ersten Seite der Polyesterfolie, wobei die Beschichtung eine Polymerkomponente und ein Vernetzungsmittel umfasst, wobei die Polymerkomponente ein Alkylencarbonsäure-Copolymer, vorzugsweise ein Ethylen-Acrylsäure-Copolymer oder ein Ethylen-Methacrylsäure-Copolymer, oder ein Phenoxyharz umfasst, wobei das Vernetzungsmittel ein Oxazolinpolymer umfasst, wobei die Polyesterfolie Bariumsulfat umfassende Weißpigmentpartikel enthält, die dazu ausreichen, der Folie eine weiße Farbe zu verleihen.

2. Beschichtete Folie nach Anspruch 1, wobei die Polyesterfolie eine Dicke von 51 µm (2 mil) bis 381 µm (15 mil) aufweist und die Beschichtung eine Dicke von 10 nm bis 60 nm aufweist.

3. Weiße Polyesterfolie nach Anspruch 1, wobei die in der Beschichtung enthaltene Polymerkomponente ein Ethylen-Acrylsäure-Copolymer oder ein Ethylen-Methacrylsäure-Copolymer umfasst.

4. Weiße Polyesterfolie nach Anspruch 1, wobei die Polymerkomponente, die in der Beschichtung enthalten ist, ein Ethylen-Acrylsäure-Copolymer umfasst und wobei das Vernetzungsmittel, das in der Beschichtung enthalten ist, ein Oxazolinpolymer umfasst.

5. Weiße Polyesterfolie nach Anspruch 4, wobei das Vernetzungsmittel ein Oxazolinpolymer umfasst, das gebildet ist aus
a. mindestens einem Oxazolinderivat gemäß einer der Strukturformeln (I) bis (III) und
b. mindestens einem weiteren Comonomer, 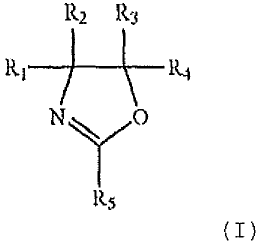 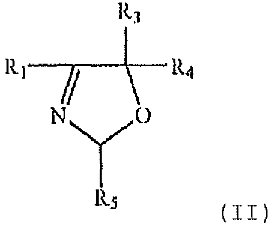 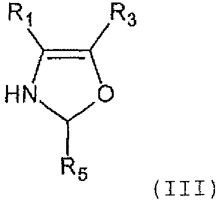
wobei die Reste R₁, R₂, R₃ und R₄ in den Strukturformeln (I) bis (III) jeweils unabhängig für Wasserstoffatome, Halogenatome, Alkylgruppen, Aralkylgruppen, Phenylgruppen oder substituierte Phenylgruppen stehen und
R₅ für einen nichtcyclischen Rest mit einer polymerisierbaren Doppelbindung steht.

6. Weiße Polyesterfolie nach Anspruch 5, wobei das Comonomer (b) eine oder mehrere der folgenden Verbindungen umfasst: Methacrylsäureester, ungesättigte Carbonsäuren, ungesättigte Nitrite, ungesättigte Amide, Vinylester, Vinylether, alpha-Olefine, halogenierte alpha, beta-ungesättigte Verbindungen oder alpha,beta-ungesättigte aromatische Verbindungen.

7. Weiße Polyesterfolie nach Anspruch 1, wobei die in der Beschichtung enthaltene Polymerkomponente ein Phenoxyharz umfasst.

8. Photovoltaikvorrichtung, umfassend:
eine Solarzelle mit einer Rückseitenabdeckung, wobei die Rückseitenabdeckung die auf eine Schicht aus vernetzten Ethylen-Vinylacetat auflaminierte weiße Polyesterfolie nach Anspruch 7 umfasst.

9. Weiße Polyesterfolie nach Anspruch 1, wobei die Polyesterfolie aus Polyethylenterephthalat hergestellt ist.

10. Weiße Polyesterfolie nach Anspruch 1, wobei die Polymerkomponente ein Ethylen-Acrylsäure-Copolymer umfasst und das Vernetzungsmittel ein Oxazolinpolymer umfasst,
wobei die Beschichtung eine Dicke von 10 nm bis 60 nm aufweist.

## Revendications

1. Un film revêtu comprenant :
un film polyester ayant une première face et une seconde face, le film polyester ayant été étiré biaxialement ; et
un revêtement sur la première face du film polyester, ledit revêtement comprenant un composant polymère et un agent de réticulation, le composant polymère comprenant un copolymère d'acide alkylène carboxylique, de préférence un copolymère éthylène-acide acrylique ou un copolymère éthylène-acide méthacrylique ou une résine phénoxy, l'agent de réticulation comprenant un polymère d'oxazoline,
le film polyester contenant des particules pigmentaires blanches comprenant du sulfate de baryum, en quantité suffisante pour conférer au film une couleur blanche.

2. Un film revêtu selon la revendication 1, dans lequel le film polyester a une épaisseur comprise dans la plage de 51 µm (2 mils) à 381 µm (15 mils) et dans lequel le revêtement a une épaisseur comprise dans la plage de 10 nm à 60 nm.

3. Un film polyester blanc selon la revendication 1, dans lequel le composant polymère contenu dans le revêtement comprend un copolymère éthylène-acide acrylique ou un copolymère éthylène-acide méthacrylique.

4. Un film polyester blanc selon la revendication 1, dans lequel le composant polymère contenu dans le revêtement comprend un copolymère éthylène-acide acrylique et dans lequel l'agent de réticulation contenu dans le revêtement comprend un polymère d'oxazoline.

5. Un film polyester blanc selon la revendication 4, dans lequel l'agent de réticulation comprend un polymère d'oxazoline formé à partir de :
a. au moins un dérivé d'oxazoline selon l'une des formules structurelles (I) à (III) ; et
b. au moins un autre comonomère, 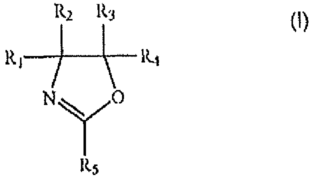 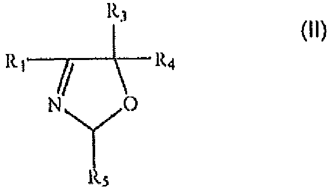 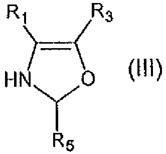
où les radicaux R₁, R₂, R₃ et R₄ dans les formules structurelles (I) à (III) représentent chacun indépendamment un atome d'hydrogène, un atome d'halogène, un groupe alkyle, un groupe aralkyle, un groupe phényle ou un groupe phényle substitué,
et R₅ est un radical non cyclique avec une double liaison polymérisable.

6. Un film polyester blanc selon la revendication 5, dans lequel le comonomère (b) comprend un ou plusieurs des composés suivants : esters méthacryliques, acides carboxyliques insaturés, nitriles insaturés, amides insaturés, esters vinyliques, éthers vinyliques, alpha-oléfines, composés halogénés alpha,bêta-insaturés ou composés aromatiques alpha,bêta-insaturés.

7. Un film polyester blanc selon la revendication 1, dans lequel le composant polymère contenu dans le revêtement comprend une résine phénoxy.

8. Un dispositif photovoltaïque comprenant :
une cellule solaire ayant un panneau arrière, ledit panneau arrière comprenant le film polyester blanc selon la revendication 7, laminé à une couche d'éthylène-acétate de vinyle réticulé.

9. Un film polyester blanc selon la revendication 1, dans lequel le film polyester est constitué de polyéthylène téréphtalate.

10. Un film polyester blanc selon la revendication 1, dans lequel le composant polymère comprend un copolymère éthylène-acide acrylique et l'agent de réticulation comprend un polymère d'oxazoline,
le revêtement ayant une épaisseur comprise dans la plage de 10 nm à 60 nm.
